(19) **Europäisches Patentamt**
**European Patent Office**
**Office européen des brevets**

(11) **EP 2 618 458 B1**

(12) **EUROPÄISCHE PATENTSCHRIFT**

(45) Veröffentlichungstag und Bekanntmachung des Hinweises auf die Patenterteilung:
**13.08.2014 Patentblatt 2014/33**

(51) Int Cl.:
***H02J 13/00*** *(2006.01)*

(21) Anmeldenummer: **12151694.2**

(22) Anmeldetag: **19.01.2012**

(54) **Verfahren zur Ermittlung von Schaltzuständen in Energieversorgungsnetzen und System zur Durchführung des Verfahrens**

Method for determining circuit states in energy supply networks and system for performing the method

Procédé destiné à détecter des états de commutation dans des réseaux d'alimentation en énergie et système destiné à l'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.07.2013 Patentblatt 2013/30**

(73) Patentinhaber: **Siemens Aktiengesellschaft 80333 München (DE)**

(72) Erfinder:
• **Kupzog, Friederich, Dr.**
  **1190 Wien (AT)**
• **Lugmaier, Andreas**
  **1140 Wien (AT)**

(74) Vertreter: **Maier, Daniel Oliver et al Siemens AG Postfach 22 16 34 80506 München (DE)**

(56) Entgegenhaltungen:
**CN-A- 1 738 143     CN-A- 102 005 757**

EP 2 618 458 B1

**Beschreibung**

Der Übergang von herkömmlichen Stromnetzen mit zentraler Stromerzeugung in leistungsfähigen Kraftwerken mit hoher Verfügbarkeit zu Netzen mit dezentraler Stromerzeugung, insbesondere auf Basis sogenannter erneuerbarer Energie wie beispielsweise mit Photovoltaik-, Windkraft- oder Biogasanlagen bringt neue Herausforderungen im Bereich der Lastregelung, der Spannungshaltung im Verteilnetz und zur Aufrechterhaltung der Netzstabilität.

Dies unter anderem auch, weil dezentrale Erzeugeranlagen im Gegensatz zu mittleren bis größeren Kraftwerken auch direkt in die unteren Spannungsebenen wie das Niederspannungsnetz oder das Mittelspannungsnetz einspeisen.

Aktuell werden elektrische Energieversorgungsnetze auf ein sogenanntes Worst-Case-Szenario, die mögliche Höchstbelastung, ausgelegt.

Diese Auslegung führt zu hohen Kosten für die Infrastruktur, da Stromnetze im Jahresdurchschnitt typisch nur etwa zu 30 bis 40 % ausgelastet sind.

Eine Reduktion der Höchstbelastung durch Vermeidung von Lastspitzen führt daher zu Kostenvorteilen und zu einer Erhöhung der Versorgungssicherheit.

Die zeitliche Gleichverteilung der Last und damit die Vermeidung von Lastspitzen kann mittels intelligenter Netze durch automatische Steuerungen und Kontrolle von Verbrauchsanlagen erfolgen.

Dazu ist es unter anderem notwendig die Netztopologie, d.h. die einzelnen Netzelemente, wie Erzeugungsanlagen und Verbraucher und die Verbindungen im Detail zu kennen. Eine händische Erfassung dieser Topologien ist aufgrund der hohen Komplexität der Niederspannungsnetze allerdings nicht zielführend.

Aus dem Stand der Technik ist es weiterhin bekannt, die Schaltzustände manuell auf Basis der von Netztechnikern vor Ort durchgeführten Schalthandlungen zu erfassen.

Diese Vorgehensweise ist nicht nur fehleranfällig, sondern auch zeitaufwändig. Bei Regelsystemen, die schnell reagieren müssen, ist die Methode daher nicht anwendbar.

Als Alternative dazu wäre es auch denkbar, dass an den Schaltern Sensoren vorgesehen werden, die den Schaltzustand erfassen und an ein Leitsystem weitergeben. Diese Lösung erfordert hohe Hardwareaufwände.

Der Erfindung liegt die Aufgabe zugrunde, dieses oder ähnliche Verfahren derartig weiterzuentwickeln, dass Schaltzustände der Schalter eines Netzes ermittelt werden können, da die Netztopologie von zwei wesentlichen Faktoren bestimmt wird, einerseits durch die Lage und Anordnung der Leitungen und andererseits durch die Schaltzustände der eingebauten Schalter.

Erfindungsgemäß geschieht dies mit einem Verfahren zur Ermittlung von Schaltzuständen in Energieversorgungsnetzen mit folgenden Verfahrensschritte:

- zu einem Energieversorgungsnetz werden auf Basis der vorhandenen Netzelemente und der möglichen Zustände der Schalter des Netzes die möglichen Netztopologien ermittelt,
- an Netzanschlußpunkten erfolgt eine Reihe von synchronisierten Strom- und Spannungsmessungen,
- aus den gemessenen Stromwerten werden zugehörige fiktive Spannungswerte berechnet,
- die berechneten fiktiven Spannungswerte werden mit den gemessenen Spannungswerten verglichen
- die Netztopologie mit den geringsten Abweichungen zwischen den berechneten fiktiven Spannungswerten und den gemessenen Spannungswerten wird als tatsächlich vorliegende aktuelle Netztopologie erfasst.

Wenn bei der Ermittlung der möglichen Netztopologien nur sinnvolle Anordnungen berücksichtigt werden, kann der Aufwand des verfahrens erheblich reduziert werden.

Es ist auch vorteilhaft, wenn die gemessenen Daten in Messmatrizen $(\underline{U}, \underline{I})$ zusammengefasst werden, wobei die erste Messmatrix $(\underline{U})$ die gemessenen Spannungswerte und die zweite Messmatrix $(\underline{I})$ die gemessenen Stromwerte beinhaltet und dass die berechneten Spannungswerte in einer Wertematrix $(\underline{U}_b)$ erfasst werden. Matrizen eignen sich besonders für die Darstellung komplexer Sachverhalte.

Ein vorteilhaftes Kriterium für das Maß der Übereinstimmung zwischen den berechneten fiktiven Spannungswerten $(\underline{U})$ und den gemessenen Spannungswerten $(\underline{U}_b)$ ist die Approximationsdiskrepanz.

Ein vorteilhaftes System zur Durchführung der Verfahren erhält man, wenn den Netzanschlußpunkten zumindest teilweise Smart Meter als fernauslesbare Stromzähler zur Messung von Strom- und Spannungswerten zugeordnet sind, wenn Mittel zur Ansteuerung der fernauslesbaren Stromzähler und Mittel zur Auswertung der gemessenen Daten, zur Berechnung der Spannungswerte und der Übereinstimmung zwischen den berechneten und den gemessenen Spannungswerten und zur Bestimmung der Topologie des Energieversorgungsnetzes vorgesehen sind.

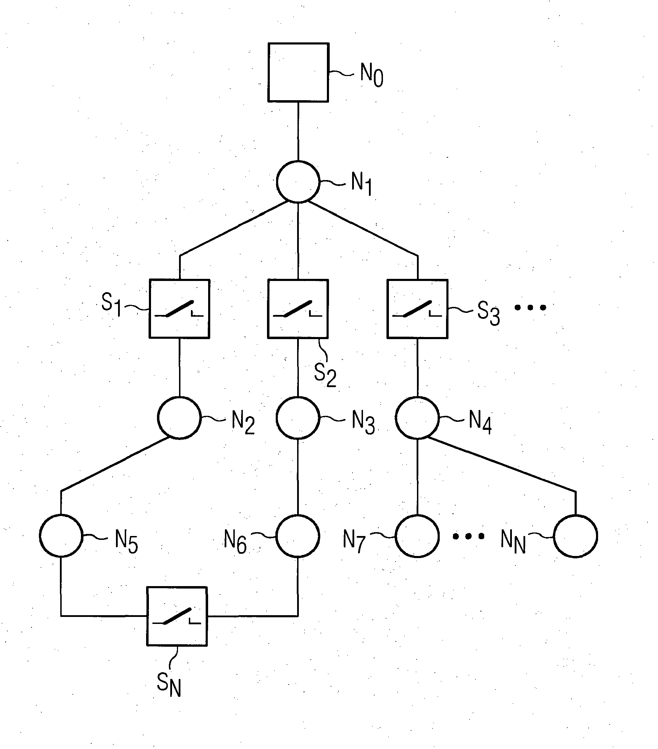

Die Erfindung wird anhand eines in der Fig. 1 dargestellten Ausführungsbeispieles näher erläutert.

Die Figur zeigt beispielhaft eine schematische Darstellung eines Netzwerkes, von dem Netzanschlußpunkte, die Verbindungen zwischen denselben und die Schalter bekannt sind,

Von dem in Figur 1 dargestellten Energieversorgungsnetzwerk werden die komplexen Strom- und komplexen Spannungsverhältnisse $\underline{U}_1/\underline{I}_1$, $\underline{U}_2/\underline{I}_2$, $\underline{U}_3/\underline{I}_3...\underline{U}_N/\underline{I}_N$ an Netzanschlußpunkten $N_0$, $N_1$, $N_2$, $N_3$, ... $N_N$ durch Strom- und Spannungsmessungen an der überwiegenden Anzahl der Netzanschlußpunkte $N_1$, $N_2$, $N_3$, ... $N_N$ mit Ausnahme des Basis-Netzanschlußpunktes $N_0$ bestimmt.

Diese Messungen werden mit sogenannten Smart Meters als fernauslesbaren Stromzählern durchgeführt, mit denen die Mehrheit der Netzanschlußpunkte $N_1$, $N_2$, $N_3$, ... $N_N$ versehen ist.

Weiterhin sind die Impedanzen der Leitungen des Netzes zumindest näherungsweise bekannt.

Zur Ermittlung des Schaltzustandes der Schalter $S_1$, $S_2$, $S_3$, ...$S_N$ wird in einer Vorbereitungsphase das Netz analysiert und die aufgrund der unterschiedlichen Schalterstellungen theoretischen Netztopologien ermittelt. Bei einer Anzahl von N Schaltern sind theoretisch $2^N$ Schalterstellungen möglich, welche eine entsprechende Zahl von unterschiedlichen Netztopologien bedingen.

Aus der Menge der theoretisch möglichen Netztopologien werden jene eliminiert, die keine sinnvolle Anordnung ergeben, beispielsweise, weil dadurch Teile des Netzes von der Versorgung abgeschnitten wären.

Zu jeder verbleibenden sinnvollen Netztopologie werden anhand der an den Netzanschlußpunkten $N_0$, $N_1$, $N_2$, $N_3$, ... $N_N$ gemessenen Ströme $\underline{I}_1$, $\underline{I}_2$, $\underline{I}_3$ ... $\underline{I}_N$ die zugehörigen Spannungen $\underline{U}_1$, $\underline{U}_2$, $\underline{U}_3$, ...$\underline{U}_N$ berechnet und mit den ebenfalls gemessenen Spannungen verglichen. Jene Netztopologie und der entsprechende Schaltzustand, für welche die Abweichungen zwischen den errechneten und den gemessenen Spannungen ein Minimum darstellen, bzw, für welche die Anpassungsgüte ein Maximum ist, werden als tatsächlich vorliegende, reale Netztopologie erfasst.

Die Anpassungsgüte gibt an, wie gut ein Modell eine Menge von Beobachtungen erklären kann. Maße der Anpassungsgüte erlauben eine Aussage über die Diskrepanz zwischen den theoretischen Werten der untersuchten Variablen, die aufgrund des Modells erwartet bzw. prognostiziert werden, und den tatsächlich gemessenen Werten.

Die Güte der Anpassung eines Modells an vorliegende Daten kann grundsätzlich mit Hilfe statistischer Tests oder geeigneter Kennzahlen beurteilt werden.

Dazu haben sich verschiedene Gütekriterien etabliert:

- Chi-Quadrat-Wert
- Anpassungsgüteindex (engl. goodness-of-fit index, GFI)
- bereinigter Anpassungsgüteindex (engl. adjusted goodness-of-fit index, AGFI)
- komparativer Anpassungsindex (engl. comparative fit index, CFI)
- normierter Anpassungsindex (engl. normed fit index, NFI)
- Approximationsdiskrepanzwurzel (engl. root mean square error of approximation, RMSEA)
- Standardisierte Residualdiskrepanzwurzel (engl. standardized root mean square residual, SRMR)

Im vorliegenden Ausführungsbeispiel wird die Methode der Approximationswurzel als Gütekriterium gewählt. In gleicher Weise ist aber auch ein anderes Gütekriterium einsetzbar.

Für die Berechnung der Spannungen wird das Netzwerkverhalten mit einer komplexen Beitragsmatrix

$$\underline{Z}\underline{i}(t) = \underline{u}(t)$$

beschrieben, wobei $\underline{u}(t)$ und $\underline{i}(t)$ Spaltenvektoren der Spannungen und Ströme an den Netzanschlußpunkten $N_0$, $N_1$, $N_2$, $N_3$, $N_N$ darstellen. Die Spannung am K-ten Netzanschlußpunkt $N_K$ kann nun gemäß

$$\underline{u}_k = \underline{z}_{k,0}\underline{i}_0 + \underline{z}_{k,1}\underline{i}_1 + \underline{z}_{k,2}\underline{i}_2 + ... + \underline{z}_{k,N}\underline{i}_N \qquad (2)$$

bestimmt werden. Der Betrag des Matrixelementes $|\underline{z}_{k,j}|$ beispielsweise ist somit ein Maß für den Einfluss des J-ten Netzanschlußpunktes $N_J$, auf die Spannung am K-ten Netzanschlußpunkt $N_K$. Die Beitragsmatrix $\underline{Z}$ gibt für jeden Netzanschlußpunkt $N_0$, $N_1$, $N_2$, $N_3$, ... $N_N$ an, welchen Einfluss eine Stromänderung an dem Netzanschlußpunkt auf die Spannungen an den jeweils anderen Netzanschlußpunkten hat.

Jedes Energieversorgungsnetz weist zumindest einen Basis-Netzanschlußpunkt $N_0$ auf, der das Netz mit Energie versorgt. Bei typischen Niederspannungsnetzen handelt es sich dabei üblicherweise um einen Transformator. Bei der Berechnung der Beitragsmatrix kann dieser Basis-Netzanschlußpunkt $N_0$ unberücksichtigt bleiben und damit der Berechnungsaufwand reduziert werden.

Die gemessenen Daten werden in zwei Messmatrizen $\underline{U}$, $\underline{I}$ zusammengefasst, wobei die erste Messmatrix $\underline{U}$ die gemessenen Spannungswerte und die zweite Messmatrix $\underline{I}$ die gemessenen Stromwerte beinhaltet. Die berechneten Spannungswerte werden in einer Wertematrix $\underline{U}_b$ erfasst.

Die Werte der ersten Messmatrix $\underline{U}$ werden mit den berechneten Spannungswerte der Wertematrix $\underline{U}_b$ verglichen und mittels der Methode der Approximationswurzel ein Gütekriterium für die Übereinstimmung ermittelt.

Die Netztopologie mit der besten Übereinstimmung - den geringsten Abweichungen - wird als tatsächlich vorliegende aktuelle Netztopologie festgelegt.

Für übliche Niederspannungsnetze mit einer 3-phasigen Struktur können die Matrizen entweder für jede Phase individuell ermittelt werden, es ist aber auch der Ansatz denkbar, dass sich die drei Phasen gleichartig verhalten und somit die Matrizen in gleicher Weise für die drei Phasen anwenden lassen als tatsächlich vorliegende aktuelle Netztopologie erfasst. Es ist in diesem Fall insbesondere auch möglich, die Messwerte aus unterschiedlichen Phasen zu einer Messmatrix $\underline{U}$, $\underline{I}$ zu kombinieren.

## Patentansprüche

1. Verfahren zur Ermittlung von Schaltzuständen in Energieversorgungsnetzen **gekennzeichnet durch** folgende Verfahrensschritte:

   - zu einem Energieversorgungsnetz werden auf Basis der vorhandenen Netz anschlußpunkte ($N_1$, $N_2$, $N_3$, ... $N_N$) und der möglichen Zustände der Schalter ($S_1$, $S_2$, $S_3$, ...$S_N$) des Netzes die möglichen Netztopologien ermittelt,
   - an den Netzanschlußpunkten ($N_1$, $N_2$, $N_3$, ... $N_N$) erfolgt eine Reihe von synchronisierten Strom- und Spannungsmessungen,
   - aus den gemessenen Stromwerten werden zu verschiedenen möglichen Netztopologien zugehörige fiktive Spannungswerte berechnet,
   - die berechneten fiktiven Spannungswerte werden mit den gemessenen Spannungswerten verglichen
   - die Netztopologie mit den geringsten Abweichungen zwischen den berechneten fiktiven Spannungswerten und den gemessenen Spannungswerten wird als tatsächlich vorliegende aktuelle Netztopologie erfasst.

2. Verfahren nach Anspruch 1, **dadurch gekennzeichnet, dass** bei der Ermittlung der möglichen Netztopologien nur sinnvolle Anordnungen berücksichtigt werden.

3. Verfahren nach Anspruch 1 oder 2, **dadurch gekennzeichnet, dass** die gemessenen Daten in Messmatrizen ($\underline{U}$, $\underline{I}$) zusammengefasst werden, wobei die erste Messmatrix ($\underline{U}$) die gemessenen Spannungswerte und die zweite Messmatrix ($\underline{I}$) die gemessenen Stromwerte beinhaltet und dass die berechneten Spannungswerte in einer Wertematrix ($\underline{U}_b$) erfasst werden.

4. Verfahren nach einem der Ansprüche 1 bis 3, **dadurch gekennzeichnet, dass** als Kriterium für das Maß der Übereinstimmung zwischen den berechneten fiktiven Spannungswerten ($\underline{U}$) und den gemessenen Spannungswerten ($\underline{U}_b$) die Approximationsdiskrepanz herangezogen wird.

5. System zur Durchführung eines der Verfahren nach einem der Ansprüche 1 bis 4 **dadurch gekennzeichnet, dass** den Netzanschlußpunkten ($N_1$, $N_2$, $N_3$, ... $N_N$) zumindest teilweise Smart Meter als fernauslesbare Stromzähler zur Messung von Strom- und Spannungswerten zugeordnet sind, dass Mittel zur Ansteuerung der fernauslesbaren Stromzähler und Mittel zur Auswertung der gemessenen Daten, zur Berechnung der Spannungswerte und der Übereinstimmung zwischen den berechneten und den gemessenen Spannungswerten und zur Bestimmung der Topologie des Energieversorgungsnetzes vorgesehen sind.

## Claims

1. Method for determining circuit states in energy supply networks, **characterised by** the following method steps:

   - the possible network topologies are determined for an energy supply network on the basis of the existing network access points ($N_1$, $N_2$, $N_3$, ... $N_N$) and the possible states of the circuits ($S_1$, $S_2$, $S_3$, ... $S_N$) of the network,
   - a series of synchronised current and voltage measurements are performed at the network access points ($N_1$, $N_2$, $N_3$, ... $N_N$),
   - the associated fictitious voltage values are calculated from the measured current values for various possible network topologies,
   - the calculated fictitious voltage values are compared with the measured voltage values

- the network topology with the smallest deviations between the calculated fictitious voltage values and the measured voltage values is used as the current network topology actually available.

**2.** Method according to claim 1, **characterised in that** only sensible arrangements are considered when determining the possible network topologies.

**3.** Method according to claim 1 or 2, **characterised in that** the measured data is summarised into measuring matrices ($\underline{U}$, $\underline{I}$), wherein the first measuring matrix ($\underline{U}$) contains the measured voltage values and the second measuring matrix ($\underline{I}$) contains the measured current values and that the calculated voltage values are captured in a value matrix ($\underline{U}_b$).

**4.** Method according to one of claims 1 to 3, **characterised in that** the approximation discrepancy is employed as the criterion for the degree of agreement between the calculated fictitious voltage values ($\underline{U}$) and the measured voltage values ($\underline{U}_b$).

**5.** System for carrying out one of the methods according to one of claims 1 to 4, **characterised in that** at least some of the network access points ($N_1$, $N_2$, $N_3$, ... $N_N$) are assigned smart meters as remotely readable electricity meters for measuring current and voltage values, that means are provided for activating the remotely readable electricity meters and means are provided for evaluating the measured data, for calculating the voltage values and for reconciling the calculated and the measured voltage values and for determining the topology of the energy supply network.

**Revendications**

**1.** Procédé destiné à détecter des états de commutation dans des réseaux d'alimentation en énergie, **caractérisé par** les étapes de procédé suivantes :

   - les topologies de réseau possibles sont déterminées pour un réseau d'alimentation en énergie sur la base des points de connexion au réseau présents ($N_1$, $N_2$, $N_3$, ..., $N_N$) et des états possibles des commutateurs ($S_1$, $S_2$, $S_3$, ..., $S_N$) du réseau,
   - une série de mesures de courant et de tension synchronisées est réalisée sur les points de connexion au réseau ($N_1$, $N_2$, $N_3$, ..., $N_N$),
   - des valeurs de tension fictives appartenant à des différentes topologies de réseau possibles sont calculées à partir des valeurs de courant mesurées,
   - les valeurs de tension fictive calculées sont comparées aux valeurs de tension mesurées,
   - la topologie de réseau ayant les écarts les plus petits entre les valeurs de tension fictives calculées et les valeurs de tension mesurées est enregistrée comme topologie de réseau actuelle effectivement présente.

**2.** Procédé selon la revendication 1, **caractérisé en ce que** seulement des dispositions judicieuses sont prises en considération lors de la détermination des topologies de réseau possibles.

**3.** Procédé selon la revendication 1 ou 2, **caractérisé en ce que** les données mesurées sont regroupées dans des matrices de mesure ($U$, $I$), la première matrice de mesure ($\underline{U}$) contenant les valeurs de tension mesurées et la deuxième matrice de mesure ($\underline{I}$) contenant les valeurs de courant mesurées et **en ce que** les valeurs de tension calculées sont enregistrées dans une matrice de valeur ($\underline{U}_b$).

**4.** Procédé selon l'une quelconque des revendications 1 à 3, **caractérisé en ce que** l'écart d'approximation est pris en compte en tant que critère pour la mesure de la concordance entre les valeurs de tension fictives calculées ($\underline{U}$) et les valeurs de tensions mesurées ($\underline{U}_b$).

**5.** Système pour la réalisation de l'un des procédés selon l'une quelconque des revendications 1 à 4, **caractérisé en ce que** des compteurs intelligents sont attribués au moins en partie aux points de connexion au réseau ($N_1$, $N_2$, $N_3$, ..., $N_N$) en tant que compteurs de courant à lecture à distance pour la mesure de valeurs de courant et de tension, **en ce que** des moyens sont ménagés pour la commande des compteurs de courant à lecture à distance et **en ce que** des moyens sont ménagés pour l'évaluation des données mesurées, pour le calcul des valeurs de tension et de la concordance entre les valeurs de tension calculées et les valeurs de tension mesurées et pour déterminer la topologie du réseau d'alimentation en énergie.